# FASCICULE DE BREVET EUROPEEN

(11) **EP 2 016 263 B1**
(45) Date de publication et mention de la délivrance du brevet: **16.09.2009**
(21) Numéro de dépôt: 07788930.1
(22) Date de dépôt: 06.04.2007
(51) Int. Cl.: F01N 9/00, F01N 3/035, F01N 3/20, F01N 7/02

(54) **PROCEDE DE PILOTAGE DU FONCTIONNEMENT D'UN MOTEUR A EXPLOSION, LIGNE D'ECHAPPEMENT POUR SA MISE EN OEUVRE ET VEHICULE AINSI EQUIPE**
VERFAHREN ZUR STEUERUNG DES BETRIEBS EINES KOLBENMOTORS, ABGASLEITUNG ZUR IMPLEMENTIERUNG DIESES VERFAHRENS UND ENTSPRECHEND AUSGESTATTETES FAHRZEUG
METHOD FOR CONTROLLING THE OPERATION OF A RECIPROCATING ENGINE, EXHAUST LINE FOR IMPLEMENTING SAID METHOD, AND SUITABLY EQUIPPED VEHICLE

(30) Priorité: 11.05.2006 FR 0651693
(43) Date de publication de la demande: 21.01.2009
(73) Titulaire: Peugeot Citroën Automobiles SA, 78140 Vélizy-Villacoublay (FR)
(72) Inventeur: AUDOUIN, Arnaud, 75018 Paris (FR)
(74) Mandataire: Ménès, Catherine
(86) Numéro de dépôt international: PCT/FR2007/051092
(87) Numéro de publication internationale: WO 2007/132102

(56) Documents cités:
- WO-A-20/04109072
- GB-A- 2 400 444
- US-A1- 2004 098 971

## Description

L'invention concerne l'industrie automobile. Plus précisément, elle concerne les systèmes de dépollution des gaz d'échappement des moteurs à explosion.

Les lignes d'échappement des véhicules automobiles doivent aujourd'hui être équipées de dispositif de dépollution des gaz d'échappement permettant de réduire le rejet dans l'environnement des particules et émissions gazeuses diverses : CO, hydrocarbures imbrûlés HC, oxydes de soufre SOx et oxydes d'azote NOx.

A cet effet, on peut utiliser la catalyse SCR (Selective catalytic reduction, réduction catalytique sélective) pour traiter les NOx émis par les moteurs Diesel. Le principe d'un tel système est de réduire chimiquement les NOx en ajoutant un agent réducteur (l'ammoniac NH₃) en amont d'un catalyseur SCR spécifique, et ainsi de permettre à ce type de moteurs de respecter des niveaux d'émissions de plus en plus strictement limités par les normes en vigueur et à venir.

Typiquement, le NH₃ est apporté dans la ligne d'échappement au moyen d'un injecteur, souvent sous la forme d'un composé précurseur tel que l'urée qui produit du NH₃ en se décomposant aux températures des gaz d'échappement peu après son introduction. Il se mélange aux gaz d'échappement, puis réagit avec les NOx des gaz d'échappement sur le catalyseur SCR selon plusieurs réactions chimiques possibles. Comme pour un catalyseur d'oxydation classique traitant les espèces CO et HC, la réaction de réduction des NOx par NH₃ est fortement dépendante de la température. Ainsi la conversion est pratiquement nulle au dessous de 150°C, mais elle est pratiquement totale au dessus de 200°C.

Les catalyseurs SCR utilisés dans l'automobile sont à base de vanadium ou de zeolithes. Ces composés interviennent de façon prépondérante dans la réduction des NOx. Or, ces composés sont fortement sensibles aux hautes températures. Typiquement, ces composés ne sont plus stables au-delà de 650°C : la structure du catalyseur s'endommage de façon irréversible, et la conversion des NOx accessible après avoir fait subir ces hautes températures au catalyseur est fortement réduite.

Enfin, le système SCR est envisagé sur des véhicules particuliers en complément d'un filtre à particules (FAP) nécessaire pour atteindre les faibles niveaux de particules émises réglementés. Il faut être en mesure de régénérer le FAP périodiquement par une combustion des particules qui y sont piégées, ce qui implique un réchauffage temporaire des gaz d'échappement jusqu'à la température de régénération (soit environ 500-550°C en amont du FAP). Si les gaz d'échappement passent sur le catalyseur SCR à ces températures, ils risquent donc de l'endommager.

On comprend que la gestion de la température des gaz d'échappement est un enjeu important des systèmes de post-traitement pour moteur Diesel utilisant le système SCR. La faisabilité et le potentiel du système SCR pour moteur Diesel sont donc étroitement liés à la définition de la ligne d'échappement adoptée, autrement dit à l'ordre et au volume des différentes briques implantées sur la ligne (catalyseur d'oxydation, SCR, FAP).

Sur une ligne d'échappement de moteur Diesel comportant un catalyseur d'oxydation et un FAP, ceux-ci sont habituellement séparés par un flexible découplant d'une part le moteur et le catalyseur, et d'autre part la partie de la ligne d'échappement placée sous le châssis du véhicule, cette partie incluant le FAP. Deux solutions d'implantation du catalyseur SCR complétant la ligne sont possibles.

La première solution consiste à implanter le catalyseur SCR en bout de la ligne d'échappement. L'injection du NH₃ ou de son précurseur a lieu entre le FAP et le catalyseur SCR. Cette solution a l'avantage de ne pas trop modifier les caractéristiques et la gestion des lignes d'échappement existantes, en ce que le fonctionnement du FAP et les conditions de sa régénération ne sont pas modifiés. Mais elle est relativement contraignante du point de vue de l'encombrement. L'injection du NH₃ est réalisée sur la partie de ligne d'échappement située sous le châssis du véhicule, et il faut prévoir à cet effet un volume suffisant pour que le mélange NH₃ - gaz ait la possibilité de se réaliser correctement en amont du catalyseur SCR, en particulier si ce volume doit aussi être consacré à la décomposition d'un précurseur du NH₃. D'autre part, cet emplacement n'est pas idéal pour le fonctionnement du catalyseur SCR. En fonctionnement normal du véhicule, le passage des gaz d'échappement à travers le FAP tend à les refroidir, ce qui peut diminuer l'efficacité de la catalyse SCR notamment lors des périodes de démarrage. Inversement, comme on l'a dit, lors des phases de régénération du FAP où les gaz qui en sortent sont à haute température, il y a un risque de dégradation du catalyseur SCR si la régénération est particulièrement sévère.

La deuxième solution consiste à implanter le catalyseur SCR immédiatement en amont du FAP. Dans ces conditions, l'injection de NH₃ ou de précurseur peut s'effectuer immédiatement en aval du catalyseur d'oxydation, notamment dans le flexible qui est situé en amont de la partie de la ligne passant sous le châssis. Il n'y a donc pas de nécessité de prévoir sous le châssis un volume supplémentaire, et on peut plus aisément adapter la catalyse SCR à un véhicule dont la conception initiale ne la prévoyait pas. La catalyse SCR a lieu sur des gaz relativement chauds, car non encore refroidis par le FAP, ce qui est favorable à son efficacité. De plus, le catalyseur SCR ne subit pas l'influence du réchauffage des gaz d'échappement lors des régénérations du FAP : il n'y a pas de risque de dégradation du catalyseur lors de ces opérations.

Cette dernière solution n'est, cependant, pas idéale. En effet, elle influence défavorablement le fonctionnement du FAP en ce que, lors de ses régénérations, il doit traiter des gaz plus froids que la normale. Cela diminue l'efficacité de ces régénérations.

Le document GB 2 400 444 divulgue un moteur Diesel et sa ligne d'échappement comportant des moyens de contrôle du fonctionnement du moteur, un filtre à particules, un superviseur du fonctionnement du moteur, un catalyseur d'oxydation, un catalyseur SCR placé en amont du filtre à particules et des moyens d'introduction d'un précurseur de NH3 en amont du catalyseur SCR.

Le but de l'invention est de proposer un procédé de gestion du fonctionnement d'un moteur Diesel rendant possible l'implantation d'un catalyseur SCR en amont du FAP tout en permettant à ces deux dispositifs de fonctionner chacun toujours dans des conditions optimales du point de vue de l'efficacité de leurs fonctionnements et de l'absence de dégradation de leurs performances.

A cet effet, l'invention a pour objet un procédé de pilotage du fonctionnement d'un moteur à explosion tel qu'un moteur Diesel et de sa ligne d'échappement comportant des moyens de contrôle du fonctionnement du moteur, un filtre à particules, un superviseur du fonctionnement du filtre à particules, un catalyseur d'oxydation, un catalyseur SCR placé en amont du filtre à particules et des moyens d'introduction de NH₃ ou d'un précurseur de NH₃ en amont du catalyseur SCR, **caractérisé en ce que**, lorsque le superviseur du FAP décide du lancement d'une régénération du filtre à particules, l'information est transmise aux moyens de contrôle du fonctionnement du moteur, qui passent en mode post-injection, et à des moyens de supervision du fonctionnement du catalyseur SCR, et en ce qu'on module la post-injection de carburant et la quantité de NH₃ ou de son précurseur injectée de manière à au moins compenser les pertes thermiques des gaz d'échappement dans le catalyseur SCR en jouant sur la chaleur dégagée par les réactions se produisant sur le catalyseur SCR.

A cet effet, on peut moduler la post-injection de carburant et la quantité de NH₃ ou de son précurseur injecté de manière à obtenir un ratio molaire NH₃/NOx entre 0,9 et 1.

L'invention a également pour objet une ligne d'échappement de moteur à explosion tel qu'un moteur Diesel, comprenant dans cet ordre un catalyseur d'oxydation, un dispositif d'injection de NH₃ ou d'un précurseur du NH₃, un catalyseur SCR et un filtre à particules, et un superviseur du fonctionnement du filtre à particules, connecté à un module de contrôle moteur, **caractérisé en ce qu**'il comporte également un superviseur du fonctionnement du catalyseur SCR intégrant un modèle de surveillance des émissions des NOx émis par le moteur et un modèle de surveillance du catalyseur SCR déterminant la quantité de NH₃ ou de précurseur à injecter, ledit superviseur du fonctionnement du catalyseur SCR étant commandé par ledit module de contrôle moteur.

Le superviseur du fonctionnement du catalyseur SCR peut renfermer des cartographies préétablies des émissions de NOx du moteur reliant ces émissions aux conditions de fonctionnement du moteur.

Le superviseur du fonctionnement du catalyseur SCR peut être connecté à un capteur mesurant la concentration des NOx dans les gaz d'échappement implanté en amont du point d'injection du NH₃ ou de son précurseur dans la ligne d'échappement.

L'invention a également pour objet un véhicule automobile équipé d'un moteur à explosion, tel qu'un moteur Diesel, **caractérisé en ce qu**'il comporte une ligne d'échappement du type précédent.

Comme on l'aura compris, l'invention consiste essentiellement à compenser les pertes thermiques subies par les gaz d'échappement dans le catalyseur SCR lors des régénérations du FAP en créant lors de ces régénérations une exotherme sur le catalyseur SCR en profitant de la chaleur dégagée par la réduction des NOx à l'aide du NH₃.

Cette compensation des pertes thermiques pourrait théoriquement être effectuée par une simple optimisation des réglages du moteur lors de la régénération du FAP, sans prise en compte fine des phénomènes survenant dans le catalyseur SCR. Mais on se heurterait à des difficultés et inconvénients divers que l'on va citer.

L'échauffement des gaz d'échappement, lors de la régénération, peut classiquement s'effectuer par une post-injection de carburant. Elle génère une forte augmentation de la dilution de gazole dans l'huile.

Aujourd'hui, les modes de chauffage pour régénérer sont calibrés en se plaçant près du maximum tolérable en dilution. Aussi, viser une température plus élevée résultera en une dilution plus importante, dépassant les critères autorisés. Viser une température plus élevée en sortie du moteur crée un risque de détérioration de la tenue thermique des éléments de sortie du moteur (collecteur, turbocompresseur...). Au minimum, une augmentation du coût du moteur est à prévoir.

L'augmentation de la température des gaz d'échappement peut se faire en sortie du moteur comme on vient de l'expliquer, avec les inconvénients mentionnés, ou bien en augmentant l'exotherme généré sur le catalyseur d'oxydation (par oxydation de CO et des HC sur le catalyseur). Là encore, les calibrations chauffage actuelles sont optimisées pour générer l'exotherme maximum tolérable par le catalyseur. Augmenter cet exotherme entraînera une dégradation plus rapide et donc réduira la durée de vie du catalyseur. Augmenter la température est aussi possible en augmentant la quantité de carburant injectée lors de la post-injection, mais cela augmente la consommation globale du moteur.

L'invention vise à exploiter les phénomènes thermiques liés aux réactions survenant sur le catalyseur SCR pour optimiser la thermique des gaz d'échappement en amont du FAP. A cet effet, on crée une exotherme sur le catalyseur SCR par la réduction des NOx à l'aide du NH₃.

En effet, on sait que les réactions de réduction des NOx par SCR sont exothermiques :
- 4NO + 4NH₃ + O₂ → 4N₂ + 6H₂O ΔH° = - 407 kJ/mol
- 3NO₂ + 4NH₃ → 3,5N₂ + 6H₂O ΔH° = - 700 kJ/mol
- et surtout 4NH₃ + 2NO + 2NO₂ → 4N₂ + 6H₂O ΔH° = - 757 kJ/mol

Les enthalpies négatives de ces trois réactions montrent bien que les réactions de réduction des NOx par l'ammoniac - c'est à dire selon le principe SCR - sont exothermiques.

De plus, lors des phases de régénération, le circuit EGR (recyclage des gaz d'échappement) étant fermé, une forte quantité de NOx est émise à chaque instant par le moteur.

En pilotant le système d'injection de l'ammoniac ou de son précurseur de façon à réduire autant de NOx que possible, une exotherme peut être créée sur le catalyseur SCR. L'intérêt de l'invention est donc double :
- elle permet de compenser la perte thermique dans le catalyseur due au contact entre les gaz et le support du matériau catalytique ; typiquement, près de 50°C supplémentaires pourraient être générés par cette méthode, valeur proche de la perte thermique dans le catalyseur ;
- elle permet aussi de réduire les émissions de NOx liées aux régénérations du FAP ; ces émissions sont aujourd'hui prises en compte sous forme d'une pondération ajoutée aux émissions de base (mesurées hors régénération) ; l'invention permet donc de réduire voire de supprimer cette pondération.

Le principe général du pilotage du catalyseur SCR selon l'invention consiste à adjoindre au système de gestion du fonctionnement du moteur un organe dit « superviseur SCR », à savoir un calculateur intégrant deux modèles contribuant à surveiller et à modifier le comportement du moteur et de son environnement.

Le premier modèle est un modèle de surveillance des émissions de NOx. Il estime à chaque instant la quantité de NOx émise par le moteur. Il peut estimer cette quantité indirectement à partir d'une cartographie préétablie des émissions, intégrée au superviseur SCR, qui permet de relier ces émissions aux conditions de fonctionnement du moteur. Il peut aussi mesurer directement ces émissions sur la base des informations fournies par un capteur mesurant la concentration des NOx implanté en sortie du moteur ou plus loin sur la ligne, en tout cas avant le point d'injection du NH₃ ou de son précurseur.

Le second modèle est un modèle de surveillance du catalyseur SCR. Il détermine à chaque instant la quantité d'agent réducteur des NOx (NH₃, urée...) devant être injectée. Il se fonde, à cet effet, sur une mesure de la température des gaz d'échappement réalisée en amont du catalyseur SCR et sur l'évaluation de la quantité de NOx en sortie du moteur réalisée par le premier modèle ci-dessus. Le superviseur SCR détermine la stratégie d'injection du composé réducteur des NOx en réalisant un compromis entre le désir d'une conversion complète des NOx et le souci d'éviter une surémission de NH₃.

Le superviseur SCR est intégré à un ensemble de gestion du fonctionnement du moteur et de sa ligne d'échappement qui comporte également :
- un organe dit « superviseur du FAP » connu en lui-même qui, notamment, détermine à quel moment une régénération du FAP est nécessaire pour lui restaurer ses propriétés filtrantes normales ;
- un module de contrôle moteur également connu en lui-même, qui commande les paramètres de fonctionnement du moteur en fonction des informations et des ordres qui lui sont transmis par les autres organes de contrôle et de commande.

Lorsque le superviseur du FAP décide du lancement d'une régénération du FAP, il envoie au module de contrôle moteur une « demande de régénération ». Le module de contrôle moteur modifie alors les paramètres de fonctionnement du moteur pour initier cette régénération. En particulier, il passe du mode de fonctionnement en régime pauvre standard à un mode de fonctionnement en post-injection selon l'un des divers modes possibles. Notamment, le circuit EGR de recyclage des gaz d'échappement est alors fermé.

Selon l'invention, la demande de régénération est aussi transmise au superviseur SCR, à la fois dans son modèle de surveillance des émissions de NOx et dans son modèle de surveillance du catalyseur SCR. Cette information entraîne un changement de mode dans le modèle de surveillance des émissions de NOx, qui tient compte de cette demande. Par exemple, le modèle passe sur une autre cartographie adaptée à la régénération du FAP.

Concernant le modèle de surveillance du catalyseur SCR, il bascule sur une stratégie différente d'injection du NH₃ ou de son précurseur. Cette nouvelle stratégie ne cherche pas, comme la précédente, à optimiser la conversion des NOx en limitant les surémissions de NH₃, mais à assurer un niveau de température des gaz d'échappement convenable à la fois pour le catalyseur SCR lui-même et le FAP qui suit, sans provoquer d'émissions de NH₃ trop importantes.

Typiquement, on pilote l'injection de NH₃ ou de son précurseur pour assurer un ratio molaire NH₃/NOx compris entre 0,9 et 1.

Dans ces conditions, on peut créer une exotherme lors de la réduction des NOx sur le catalyseur SCR qui est au moins égale à la perte thermique qui se produirait normalement sur le catalyseur SCR. De cette façon, la présence du catalyseur SCR en amont du FAP n'a pas d'influence défavorable sur l'efficacité des régénérations du FAP.

On peut ainsi à la fois optimiser le fonctionnement du catalyseur SCR lors des périodes de fonctionnement normal du moteur et optimiser sa durée de vie en lui évitant des surchauffes au moment des régénérations du FAP. Et en réduisant le formation de NOx lors des régénérations on réduit, voire supprime, la pénalité NOx liée aux régénérations.

L'invention s'applique prioritairement aux moteurs Diesel. Elle peut aussi s'appliquer à d'autres types de moteurs à explosion où elle serait utile.

## Revendications

1. Procédé de pilotage du fonctionnement d'un moteur à explosion tel qu'un moteur Diesel et de sa ligne d'échappement comportant des moyens de contrôle du fonctionnement du moteur, un filtre à particules, un superviseur du fonctionnement du filtre à particules, un catalyseur d'oxydation, un catalyseur SCR placé en amont du filtre à particules et des moyens d'introduction de NH₃ ou d'un précurseur de NH₃ en amont du catalyseur SCR, **caractérisé en ce que**, lorsque le superviseur du filtre à particules décide du lancement d'une régénération du filtre à particules, l'information est transmise aux moyens de contrôle du fonctionnement du moteur, qui passent en mode post-injection, et à des moyens de supervision du fonctionnement du catalyseur SCR, et **en ce qu'**on module la post-injection de carburant et la quantité de NH₃ ou de son précurseur injectée de manière à au moins compenser les pertes thermiques des gaz d'échappement dans le catalyseur SCR en jouant sur la chaleur dégagée par les réactions se produisant sur le catalyseur SCR.

2. Procédé selon la revendication 1, **caractérisé en ce qu'**on module la post-injection de carburant et la quantité de NH₃ ou de son précurseur injecté de manière à obtenir un ratio molaire NH₃/NOx entre 0,9 et 1.

3. Ligne d'échappement de moteur à explosion tel qu'un moteur Diesel, comprenant dans cet ordre un catalyseur d'oxydation, un dispositif d'injection de NH₃ ou d'un précurseur du NH₃, un catalyseur SCR et un filtre à particules, et un superviseur du fonctionnement du filtre à particules, connecté à un module de contrôle moteur, **caractérisé en ce qu'**il comporte également un superviseur du fonctionnement du catalyseur SCR intégrant un modèle de surveillance des émissions des NOx émis par le moteur et un modèle de surveillance du catalyseur SCR déterminant la quantité de NH₃ ou de précurseur à injecter, ledit superviseur du fonctionnement du catalyseur SCR étant commandé par ledit module de contrôle moteur.

4. Ligne d'échappement selon la revendication 3, **caractérisé en ce que** le superviseur du fonctionnement du catalyseur SCR renferme des cartographies préétablies des émissions de NOx du moteur reliant ces émissions aux conditions de fonctionnement du moteur.

5. Ligne d'échappement selon la revendication 3, **caractérisée en ce que** le superviseur du fonctionnement du catalyseur SCR est connecté à un capteur mesurant la concentration des NOx dans les gaz d'échappement implanté en amont du point d'injection du NH₃ ou de son précurseur dans la ligne d'échappement.

6. Véhicule automobile équipé d'un moteur à explosion, tel qu'un moteur Diesel, **caractérisé en ce qu'**il comporte une ligne d'échappement selon l'une des revendications 3 à 5.

## Claims

1. Method of running the operation of a combustion engine such as a diesel engine and of its exhaust line, comprising means of controlling the operation of the engine, a particulate filter, a particulate filter operation supervisor, an oxidation catalytic converter and SCR catalytic converter positioned upstream of the particulate filter and means of introducing NH₃ or an NH₃ precursor upstream of the SCR catalytic converter, **characterized in that**, when the particulate filter supervisor decides to initiate a regeneration of the particulate filter, the information is transmitted to the means of controlling the operation of the engine, which switch to post-injection mode, and to means of supervising the operation of the SCR catalytic converter, and **in that** the post-injection of fuel and the amount of NH₃ or precursor thereof injected is modulated in such a way as to at least compensate for the thermal losses of the exhaust gases in the SCR catalytic converter by altering the heat released by the reactions that take place on the SCR catalytic converter.

2. Method according to claim 1, **characterized in that** the post-injection of fuel and the amount of NH₃ or precursor thereof injected is modulated in such a way as to obtain and NH_{3/}NOx mole ratio of between 0.9 and 1.

3. Exhaust line of a combustion engine such as a diesel engine comprising, in this order, an oxidation catalytic converter a NH₃ or NH₃ precursor injection device, an SCR catalytic converter and a particulate filter, and a supervisor that supervises the operation of the particulate filter, connected to an engine control module, **characterized in that** it also comprises a supervisor that supervisors the operation of the SCR catalytic converter incorporating a model that model that monitors the emissions of NOx emitted by the engine and a model that monitors the SCR catalytic converter determining the amount of NH₃ or precursor to inject, the said SCR catalytic converter operation supervisor being operated by the said engine control module.

4. Exhaust line according to Claim 3, **characterized in that** the SCR catalytic converter operation supervisor contains pre-established maps of engine NOx emissions linking these emissions to the engine operating conditions.

5. Exhaust line according to Claim 3, **characterized in that** the SCR catalytic converter operation supervisor is connected to a sensor that measures the NOx concentration in the exhaust gases installed upstream of the point at which NH₃ or the precursor thereof is injected into the exhaust line.

6. Motor vehicle equipped with a combustion engine, such as a diesel engine, **characterized in that** it comprises an exhaust line according to one of Claims 3 to 5.

## Patentansprüche

1. Verfahren zum Steuern des Betriebs eines Verbrennungsmotors wie etwa eines Dieselmotors und seiner Abgasleitung, mit Mitteln zum Steuern des Betriebs des Motors, einem Partikelfilter, einer Einrichtung zum Überwachen des Betriebs des Partikelfilters, einem Oxidationskatalysator, einem SCR-Katalysator, der stromaufseitig vom Partikelfilter angeordnet ist, und Mitteln zum Einleiten von NH₃ oder eines NH₃-Vorläufers stromaufseitig von dem SCR-Katalysator, **dadurch gekennzeichnet, dass** dann, wenn die Einrichtung zum Überwachen des Betriebs des Partikelfilters den Beginn einer Regeneration des Partikelfilters bestimmt, Informationen sowohl an die Mittel zum Steuern des Betriebs des Motors gesendet werden, die in den Nacheinspritzungsmodus übergehen, als auch an Mittel zum Überwachen des Betriebs des SCR-Katalysators gesendet werden, und dass die Nacheinspritzung von Kraftstoff und die eingespritzte Menge von NH₃ oder des NH₃-Vorläufers in der Weise moduliert werden, dass zumindest die Wärmeverluste des Abgases im SCR-Katalysator ausgeglichen werden, indem die Wärme, die durch die im SCR-Katalysator auftretenden Reaktionen freigesetzt wird, variiert wird.

2. Verfahren nach Anspruch 1, **dadurch gekennzeichnet, dass** die Nacheinspritzung von Kraftstoff und die eingespritzte Menge von NH₃ oder des NH₃-Vorläufers in der Weise moduliert werden, dass ein Molverhältnis NH₃/NOₓ im Bereich von 0,9 bis 1 erhalten wird.

3. Abgasleitung für Verbrennungsmotor wie etwa einen Dieselmotor, die in dieser Reihenfolge einen Oxidationskatalysator, eine Vorrichtung zum Einspritzen von NH₃ oder eines NH₃-Vorläufers, einen SCR-Katalysator und einen Partikelfilter sowie eine Einrichtung zum Überwachen des Betriebs des Partikelfilters, die mit einem Motorsteuermodul verbunden ist, enthält, **dadurch gekennzeichnet, dass** sie außerdem eine Einrichtung zum Überwachen des Betriebs des SCR-Katalysators enthält, in die ein Überwachungsmodell für von dem Motor emittierte NOₓ-Emissionen und ein Überwachungsmodell des SCR-Katalysators, das die einzuspritzende Menge von NH₃ oder des NH₃-Vorläufers bestimmt, integriert sind, wobei die Einrichtung zum Überwachen des Betriebs des SCR-Katalysators durch das Motorsteuermodul gesteuert wird.

4. Abgasleitung nach Anspruch 3, **dadurch gekennzeichnet, dass** die Einrichtung zum Überwachen des Betriebs des SCR-Katalysators ihrerseits im Voraus erstellte Kennfelder der NOₓ-Emissionen des Motors enthält, die diese Emissionen mit den Betriebsbedingungen des Motors in Beziehung setzen.

5. Abgasleitung nach Anspruch 3, **dadurch gekennzeichnet, dass** die Einrichtung zum Überwachen des Betriebs des SCR-Katalysators mit einem Sensor verbunden ist, der die NOₓ-Konzentration in den Abgasen misst und stromaufseitig von dem Einspritzpunkt für NH₃ oder des NH₃-Vorläufers in die Abgasleitung eingesetzt ist.

6. Kraftfahrzeug, das mit einem Verbrennungsmotor wie etwa einem Dieselmotor ausgerüstet ist, **dadurch gekennzeichnet, dass** es eine Abgasleitung nach einem der Ansprüche 3 bis 5 enthält.
